# EUROPEAN PATENT SPECIFICATION

(11) **EP 4 339 257 B1**
(45) Date of publication and mention of the grant of the patent: **02.07.2025**
(21) Application number: 23152571.8
(22) Date of filing: 20.01.2023
(51) Int. Cl.: C09K 8/504, C09K 8/506, C09K 8/58

(54) **SALINITY-INDUCED SELF-COALESCENCE MODIFIED GRAPHITE OXIDE NANOPARTICLES PROFILE CONTROL SYSTEM, PREPARATION METHOD THEREOF AND APPLICATION METHOD THEREOF IN PROFILE CONTROL OF ULTRA-DEEP RESERVOIR**
SALINITÄTSINDUZIERTES SELBSTKOALESZENZ-MODIFIZIERTES GRAPHITOXIDNANOPARTIKEL-PROFILSTEUERUNGSSYSTEM, HERSTELLUNGSVERFAHREN DAFÜR UND ANWENDUNGSVERFAHREN DAFÜR BEI DER PROFILSTEUERUNG EINES ULTRATIEFEN RESERVOIRS
SYSTÈME DE COMMANDE DE PROFIL DE NANOPARTICULES D'OXYDE DE GRAPHITE MODIFIÉ PAR AUTO-COALESCENCE INDUITE PAR LA SALINITÉ, SON PROCÉDÉ DE PRÉPARATION ET SON PROCÉDÉ D'APPLICATION

(30) Priority: 14.09.2022 CN 202211117859
(43) Date of publication of application: 20.03.2024
(73) Proprietor: China University of Petroleum (East China), Qingdao, Shandong 266580 (CN)
(72) Inventor: ZHAO, Guang, Qingdao, 266580 (CN); LI, Jiaming, Qingdao, 266580 (CN); DAI, Caili, Qingdao, 266580 (CN); WANG, Teng, Qingdao, 266580 (CN); LIU, Yifei, Qingdao, 266580 (CN); LYU, Dongfang, Qingdao, 266580 (CN); XIE, Zhongxu, Qingdao, 266580 (CN); LI, Lin, Qingdao, 266580 (CN); SUN, Yongpeng, Qingdao, 266580 (CN)
(74) Representative: Ström & Gulliksson AB

(56) References cited:
- CN-A- 109 400 955
- CN-A- 111 978 944
- CN-A- 112 110 442
- US-B1- 10 829 378
- US-B2- 10 934 475

## Description

### FIELD

The present disclosure relates to the technical field of oil field chemistry, particularly to salinity-induced self-coalescence modified graphite oxide nanoparticles profile control system, preparation method thereof and application method thereof in profile control of ultra-deep reservoir.

### BACKGROUND

Along with the progress and development of the petroleum industry, the target strata for oil and gas exploration and exploitation have been gradually shifted from the middle and shallow strata to the deep and ultra-deep strata. Based on the results of the Fourth Resource Evaluation, the oil and gas resources in deep and ultra-deep strata in China have reached 67.1 billion tons of oil equivalents, which accounts for about 34% of the total oil and gas resources, and the corresponding exploration and development potential is enormous. However, both the deep and ultra-deep reservoir strata face the problems of heterogeneous control of the reservoir strata, wherein the heterogeneous control problems of the deep reservoir strata (≥4,500m) have been substantially resolved, the ultra-deep reservoir strata (6,000-9,000m) are generally exposed to more harsh reservoir conditions such as ultra-high temperature (≥150°C), high salinity (≥10×10⁴mg/L), low permeability (≤ 50mD), the heterogeneous profile control of reservoir strata faces with increased difficulty, resulting in the fluid channeling after injecting with water or gas. Therefore, controlling heterogeneity of reservoir strata and achieving the balanced displacement are essential measures for increasing production of the ultra-deep reservoir, an efficient profile control system is the core. The existing profile control systems, such as the polymer gel system, the foam system, the polymeric microspheres and the inorganic precipitation system, have significant effects in the profile control of shallow to deep reservoir, but the application of aforementioned systems to the profile control of ultra-deep reservoir strata remains confront with numerous challenges, for instance, the polymer gel system is prone to suffer from dehydration and instability under the conditions of high temperature and high salinity, the foam system can hardly be injected and exhibits a short period of validity, the polymeric microspheres have limited resistance to high temperature and high salinity although the microspheres can be easily migrated to deep parts of the stratum; by contrast, the inorganic precipitation system is resistant to high temperature and high salinity, but the system has a short migration distance and is prone to cause plugging at the near-borehole area. Therefore, it is urgent to invent a heterogeneity control agent for ultra-deep reservoir having the desirable properties of "high temperature resistance, high salinity resistance, injectability, and long distance migration". In CN 109 400 955 a kind of simple function group polyethex amine modification graphene oxide and its applications in epoxy resin composite material is disclosed. Further, in CN 111 978 944 application of modified nano graphene oxide as a chemical agent for improving the recovery ratio of a low-permeability reservoir is disclosed.

### SUMMARY

It is an object of the present disclosure to overcome the problems in the prior art with respect to insufficient control on the heterogeneity of the high temperature and high salinity reservoir strata, for example, the existing profile control agents "have poor performances in high temperature resistance, high salinity resistance, migration distance and profile controllability", and provide salinity-induced self-coalescence modified graphite oxide nanoparticles profile control system, preparation method thereof and application method thereof in profile control of ultra-deep reservoir, the modified graphite oxide nanoparticles have self-coalescence effect under the conditions of high temperature and high salinity, and are applicable in the high temperature and high salinity reservoir strata, thereby achieving the heterogeneity profile control of the high temperature and high salinity reservoir strata.

In order to achieve the above objects, a first aspect of the present disclosure provides a salinity-induced self- coalescence modified graphite oxide nanoparticles for ultra-deep reservoir comprising graphite oxide nanoparticles and a monofunctional polyether amine covalently grafted to the surface of the graphite oxide nanoparticles through amide bonds, the monofunctional polyether amine has a structural formula shown by Formula (I); 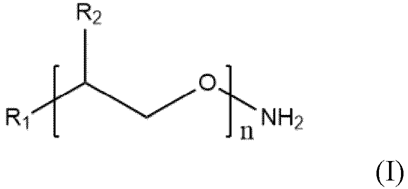
wherein R₁ is one selected from C₁-C₅ alkyl; R₂ is H or one of the C₁-C₅ alkyl;
n is an integer from 10 to 60.

A second aspect of the present disclosure provides a method of preparing the aforementioned modified graphite oxide nanoparticles including:
(1) dispersing graphite oxide nanoparticles in a solvent to obtain a graphite oxide nanoparticles dispersion liquid;
(2) mixing the graphite oxide nanoparticles dispersion liquid with a material I, a material II and monofunctional polyether amine under an inert gas atmosphere, and carrying out a reaction to obtain a mixed reaction liquid;
(3) filtering, washing and drying the mixed reaction liquid to prepare the modified graphite oxide nanoparticles;

wherein the material I in step (2) is selected from 1-ethyl-(3-dimethylaminopropyl) carbodiimide hydrochloride and/or dicyclohexylcarbodiimide;
the material II is selected from 1-hydroxybenzotriazole and/or N-hydroxysuccinimide.

In a third aspect, the present disclosure provides a salinity-induced self-coalescence modified graphite oxide nanoparticles for ultra-deep reservoir profile control system comprising 0.1-1wt% of graphite oxide nanoparticles; the graphite oxide nanoparticles which comprises the modified graphite oxide nanoparticles according to the present disclosure.

In a fourth aspect, the present disclosure provides a method of using the salinity-induced self-coalescence modified graphite oxide nanoparticles for ultra-deep reservoir profile control system into ultra-deep reservoir stratum including:
(a) pre-cleaning an ultra-deep reservoir stratum by using a slug of fresh water and/or low salinity water; and preferably, an injection amount of the fresh water and/or the low salinity water is preferably 0.05-0.1 time of the stratum pore volume;
(b) injecting a dispersion liquid slug containing the aforementioned salinity-induced self-coalescence modified graphite oxide nanoparticles for ultra-deep reservoir profile control system into the ultra-deep reservoir stratum; preferably, the injection amount of aforementioned dispersion liquid is 0.05-0.3 time of the stratum pore volume;
(c) closing the borehole for 7-15 days under conditions of the ultra-deep reservoir; and inducing the modified graphite oxide nanoparticles in the salinity-induced self-coalescence modified graphite oxide nanoparticles for ultra-deep reservoir profile control system to be shifted from the nanometer scale to micrometer scale;
(d) finishing the aforementioned steps, subsequently carrying out water flooding or gas flooding, and performing normal production.

Due to the above-described technical scheme, the modified graphite oxide nanoparticles of the present disclosure and the polyether amine molecular chain segments which have been covalently grafted to the surface of the graphite oxide nanoparticles generate an steric hindrance effect, such that the modified graphite oxide nanoparticles have desirable dispersion stability in deionized water or fresh water as well as small nanometer scale particle size.

The profile control system constructed using the modified graphite oxide nanoparticles of the present disclosure exhibits excellent stability under the conditions of high temperature and low salinity, thus the modified graphite oxide nanoparticles can follow the profile control system and deeply access the strata; the modified graphite oxide nanoparticles in the profile control system are thermodynamically unstable under the environment of high temperature and high salinity, the thermal motion of the modified graphite oxide nanoparticles is accelerated under the environment of high temperatures and high salinity, increase the probability of collisions between the modified graphite oxide nanoparticles, further compress the diffusion electric double layer on the surface of the modified graphite oxide nanoparticles by using the ions (e.g., Na⁺, Ca²⁺, Mg²⁺) in salinity water of the strata, resulting in decreased electrostatic repulsive force and increased attractive forces between the modified graphite oxide nanoparticles, thereby causing the salinity-induced self-coalescence phenomenon, which increases the particle size from nanometer scale to micrometer scale, exhibits a large coalescence multiple (greater than 50 times) and a characteristic of high strength after coalescence.

When the profile control system of the present disclosure is used in the high temperature and high salinity reservoir (e.g., ultra-deep reservoir strata), it is capable of producing the effects of "high temperature resistance, high salinity resistance, injectability, long distance migration and profile controllability", and induces the modified graphite oxide nanoparticles profile control system to coalescence from the nanometer scale to micrometer scale by taking advantage of the high temperature and high salinity environment of the reservoir strata, can control heterogeneity of the high temperature and high salinity reservoir (e.g., ultra-deep reservoir strata), and impose an effective control on the water channeling /gas channeling passage or crack system, thereby improving heterogeneity of the ultra-deep reservoir strata and resulting in substantially enhanced oil and gas recovery.

The salinity-induced self-coalescence modified graphite oxide nanoparticles for ultra-deep reservoir profile control system constructed with the modified graphite oxide nanoparticles have many advantages, such as wide raw material source, simple preparation process, high yield, stable product properties, facilitating industrial production of the product in the present disclosure, and the profile control system requires a simple on-site formulation and injection process, and has a flexible operation arrangement, and facilitates implementation of the oil fields.

### BRIEF DESCRIPTION OF THE DRAWINGS

FIG. 1 illustrates an infrared spectrum graph of the modified graphite oxide nanoparticles prepared in Example 1 of the present disclosure;
FIG. 2 illustrates the macro-scopic morphology of the modified graphite oxide nanoparticles in the ultra-deep reservoir salinity-induced self-coalescence modified graphite oxide nanoparticles profile control system prepared in Example 1 of the present disclosure;
FIG. 3 shows the macro-scopic morphology of the salinity-induced self-coalescence modified graphite oxide nanoparticles profile control system prepared in Example 5 of the present disclosure before and after the aging process under the simulated reservoir conditions.

### DETAILED DESCRPITION

The ultra-deep reservoir strata refer to the reservoir strata having a burial depth larger than 6,000 meters (e.g., 6,000-9,000 meters).

The conditions of high temperature and high salinity refer to the conditions consisting of a temperature ≥ 150°C, and a salinity ≥ 10×10⁴ mg/L.

A first aspect of the present disclosure provides an ultra-deep reservoir salinity-induced self-coalescence modified graphite oxide nanoparticles comprising graphite oxide nanoparticles and a monofunctional polyether amine covalently grafted to the surface of the graphite oxide nanoparticles through amide bonds, the monofunctional polyether amine has a structural formula shown by Formula (I); 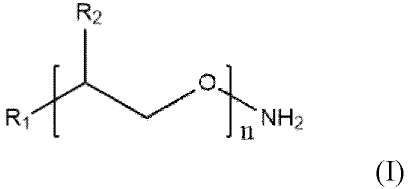
wherein R₁ is one selected from C₁-C₅ alkyl; R₂ is H or one of the C₁-C₅ alkyl;
n is an integer from 10 to 60. The polyether amine molecular chain segments covalently grafted to the surface of the graphite oxide nanoparticles generate an steric hindrance effect, such that the modified graphite oxide nanoparticles have desirable dispersion stability in deionized water or fresh water and small nanometer scale particle size.

According to a preferred embodiment of the present disclosure, R₁ may be one of methyl, ethyl, propyl and butyl, R₁ is preferably CH₃.

According to a preferred embodiment of the present disclosure, R₂ may be at least one of hydrogen, methyl, ethyl, propyl and butyl, R₂ is preferably H and/or CH₃.

According to a preferred embodiment of the present disclosure, n is 12, 20, 40 or 60.

In the present disclosure, the modified graphite oxide nanoparticles may have a wide selectable range of average particle size. According to a preferred embodiment of the present disclosure, the modified graphite oxide nanoparticles have an average lamellar size of 150-600 nm, preferably 200-500 nm.

In the present disclosure, the modified graphite oxide nanoparticles may have a wide selectable range of thickness. According to a preferred embodiment of the present disclosure, the modified graphite oxide nanoparticles have an average lamellar thickness of 1-100 nm, preferably 1-20 nm.

The grafting ratio of the monofunctional polyether amine can be selected from a wide range in the present disclosure. According to a preferred embodiment of the present disclosure, the monofunctional polyether amine has a grafting ratio of 15-40wt%, based on a total weight of the modified graphite oxide nanoparticles.

According to a preferred embodiment of the present disclosure, the modified graphite oxide nanoparticles have at least one structure shown in Formulae (II), (III), (IV) and (V);

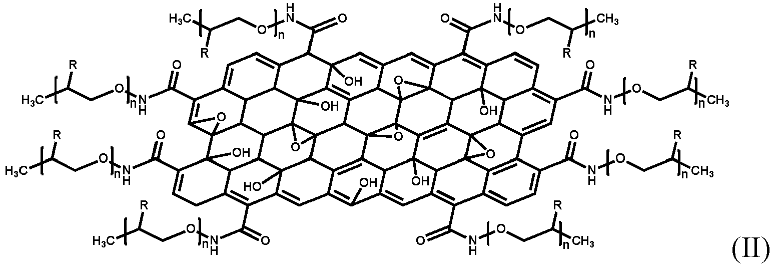

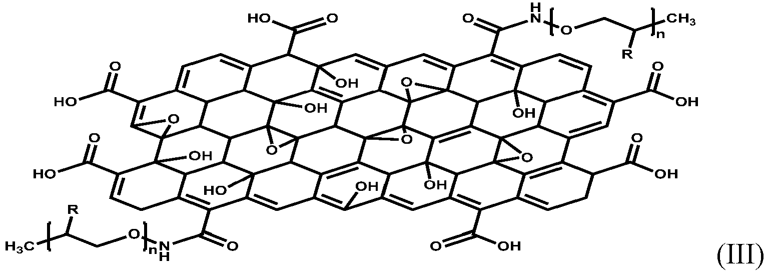

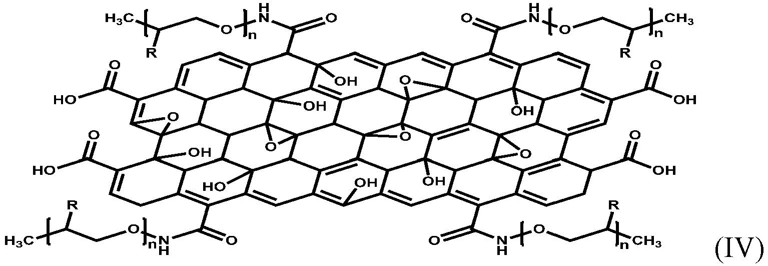

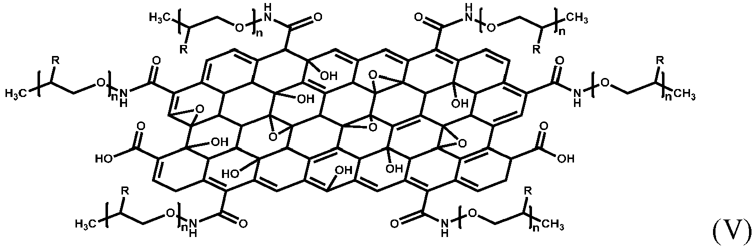

According to a preferred embodiment of the present disclosure, in Formulae (II), (III), (IV) and (V), R is each independently H and/or CH₃; n is each independently 12, 20, 40 or 60.

According to a preferred embodiment of the present disclosure, the modified graphite oxide nanoparticles have the structure shown by Formula (II).

In the present disclosure, the objects of the present disclosure can be achieved as long as the features of the modified graphite oxide nanoparticles have the characteristics of the present disclosure, and the method of preparing the modified graphite oxide nanoparticles is not particularly defined therein. In a second aspect, the present disclosure provides a method of preparing the aforementioned modified graphite oxide nanoparticles including:
(1) dispersing graphite oxide nanoparticless in a solvent to obtain a graphite oxide nanoparticles dispersion liquid;
(2) mixing the graphite oxide nanoparticles dispersion liquid with a material I, a material II and monofunctional polyether amine under an inert gas atmosphere, and carrying out a reaction to obtain a mixed reaction liquid;
(3) filtering, washing and drying the mixed reaction liquid to prepare the modified graphite oxide nanoparticles;

wherein the material I in step (2) is selected from 1-ethyl-(3-dimethylaminopropyl) carbodiimide hydrochloride and/or dicyclohexylcarbodiimide;
the material II is selected from 1-hydroxybenzotriazole and/or N-hydroxysuccinimide. According to the present disclosure, the monofunctional polyether amine is covalently grafted on the surface of graphite oxide nanoparticles through amide bonds by using the material I and the material II as catalysts.

According to a preferred embodiment of the present disclosure, the method of preparing the aforementioned modified graphite oxide nanoparticles including:
(1) dispersing graphite oxide nanoparticles in a solvent under a temperature condition of 20-30 °C to obtain a graphite oxide nanoparticles dispersion liquid;
(2) adding a material I and a material II into the graphite oxide nanoparticles dispersion liquid in step (1) at the temperature of 20-30°C under an inert gas atmosphere condition to obtain an active graphite oxide nanoparticles dispersion liquid;
(3) adding monofunctional polyether amine into the active graphite oxide nanoparticles dispersion liquid in step (2) under the inert gas atmosphere condition, to carry out a reaction to obtain a mixed reaction liquid;
(4) filtering, washing and drying the mixed reaction liquid to prepare the modified graphite oxide nanoparticles.

In accordance with a preferred embodiment of the present disclosure, the material I is 1-ethyl-(3-dimethylaminopropyl) carbodiimide hydrochloride.

In accordance with a preferred embodiment of the present disclosure, the material II is N-hydroxysuccinimide.

According to a preferred embodiment of the present disclosure, the dosage ratio of the graphite oxide nanoparticles to the monofunctional polyether amine is (0.1-1): (0.5-2).

According to a preferred embodiment of the present disclosure, the dosage ratio of the graphite oxide nanoparticles to the material I is (0.1-1): (0.1-0.5).

According to a preferred embodiment of the present disclosure, the dosage ratio of the graphite oxide nanoparticles to the material II is (0.1-1): (0.1-0.5).

The reaction conditions in step (4) of the present disclosure may be selected from a wide range, and the reaction time may be adjusted appropriately according to the reaction temperature. According to a preferred embodiment of the present disclosure, the reaction conditions comprise: a reaction temperature of 50-60°C, preferably 52-58°C; and a reaction time of 24-48h, preferably 30-42h.

In step (4) of the present disclosure, the condensed reflux reaction is performed by adding the monofunctional polyether amine into the active graphite oxide nanoparticles dispersion liquid in step (2).

In the present disclosure, the process of dispersing graphite oxide nanoparticles in a solvent can be implemented by means of the conventional dispersion methods in the art, such as stirring, ultrasonic dispersion. According to a preferred embodiment of the present disclosure, ultrasonic dispersion is used, it is preferable that the ultrasonic power is within a range of 260-390W, preferably within a range of 300-350W; and the ultrasonic dispersion time is within a range of 20-30 minutes, preferably 25 minutes.

In the present disclosure, the dispersion of 1-ethyl- (3-dimethylaminopropyl) carbodiimide hydrochloride and N-hydroxysuccinimide into the dispersion of graphite oxide nanoparticles can be achieved by means of the conventional dispersion methods in the art, such as stirring, ultrasonic dispersion.

The modes and conditions of filtering, washing and drying in the present disclosure are not particularly limited in the present disclosure, may be modes and conditions of filtering, washing and drying conventionally used in the art; for example, the filtering may be performed using a polytetrafluoroethylene membrane having a pore size of 0.1-0.45µm, for instance, the filtering may be performed using a polytetrafluoroethylene membrane having a pore size of 0.22µm; for example, a washing solvent may be any one selected from the group consisting of anhydrous methanol, anhydrous ethanol, or a combination thereof; the number of washing may be from 2 to 5 times, preferably from 3 to 4 times; and the drying mode may be any one of freeze drying or vacuum drying; the drying time may be 24-96 h, preferably 48-72 h.

The present disclosure does not impose particular requirements on the protective gas, for example, it may be one or more selected from the group consisting of nitrogen gas, helium gas and argon gas, preferably nitrogen gas.

The ratio of the graphite oxide nanoparticles to the solvent can be selected from a wide range of the present disclosure. In accordance with a preferred embodiment of the present disclosure, the ratio of the graphite oxide nanoparticles to the solvent is 1: 100-1,000.

According to a preferred embodiment of the present disclosure, the graphite oxide nanoparticles has an average lamellar size of 50-500 nm; preferably 100-300 nm.

According to a preferred embodiment of the present disclosure, the graphite oxide nanoparticles have an average lamellar thickness of 1-100 nm, preferably 1-20 nm.

In accordance with a preferred embodiment of the present disclosure, the monofunctional polyether amine has a number average molecular weight of 600-3,000 g/mol.

The solvent is not specifically defined in the present disclosure. According to a preferred embodiment of the present disclosure, the solvent is at least one of water, methanol and ethanol.

A third aspect of the present disclosure provides a salinity-induced self-coalescence profile control system comprising 0.1-1wt% of graphite oxide nanoparticles which comprises the modified graphite oxide nanoparticles according to the present disclosure. The profile control system constructed using the modified graphite oxide nanoparticles of the present disclosure have excellent stability under the conditions of high temperature and low salinity, thus the modified graphite oxide nanoparticles can follow the profile control system and deeply access the strata; the modified graphite oxide nanoparticles in the profile control system are thermodynamically unstable under the environment of high temperature and high salinity, the thermal motion of the modified graphite oxide nanoparticles is accelerated under the environment of high temperatures and high salinity, increase the probability of collisions between the modified graphite oxide nanoparticles, further compress the diffusion electric double layer on the surface of the modified graphite oxide nanoparticles by using the ions (e.g., Na⁺, Ca²⁺, Mg²⁺ and so on) in salinity water of the strata, resulting in decreased electrostatic repulsive force and increased attractive forces between the modified graphite oxide nanoparticles, and salinity-induced self-coalescence phenomenon, which increases the particle size from nanometer scale to micrometer scale, exhibits a large coalescence multiple (greater than 50 times) and a characteristic of high strength after coalescence.

When the profile control system of the present disclosure is used in the high temperature and high salinity reservoir (e.g., ultra-deep reservoir strata), it is capable of producing the effects of "high temperature resistance, high salinity resistance, injectability, long distance migration and profile controllability", and induces the modified graphite oxide nanoparticles profile control system to coalescence from the nanometer scale to micrometer scale by taking advantage of the high temperature and high salinity environment of the reservoir strata, can control heterogeneity of the high temperature and high salinity reservoir (e.g., ultra-deep reservoir strata), and impose an effective control on the water channeling /gas channeling passage or crack system, thereby improving heterogeneity of the ultra-deep reservoir strata and resulting in substantially enhanced oil and gas recovery.

According to a preferred embodiment of the present disclosure, the profile control system further comprises a dispersant, preferably in an amount of 0.5-2wt%.

According to a preferred embodiment of the present disclosure, the profile control system further comprises water, preferably in an amount of 97-99.4wt%.

In the present disclosure, the water is at least one selected from the group consisting of deionized water, fresh water and tap water.

The present disclosure does not impose specific definition on the kinds of dispersant, the conventional dispersants in the art can be used in conjunction with the modified graphite oxide nanoparticles. According to a preferred embodiment of the present disclosure, the dispersant is at least one selected from the group consisting of sodium dodecylbenzene sulphonate, sodium lauryl sulphate and a substance having the structure shown by Formula (VI), preferably the substance having the structure shown by Formula (VI): 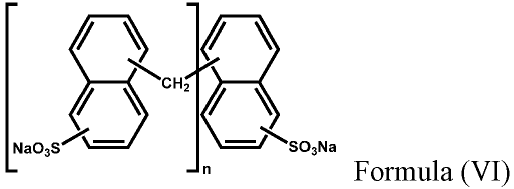 wherein n is an integer from 1 to 4.

The method of preparing the profile control system is not particularly defined in the present disclosure, provided that the ingredients of the profile control system are blended and dispersed uniformly. According to a preferred embodiment of the present disclosure, the present disclosure provides a method of preparing the profile control system including:
(i) adding a dispersant to deionized water or fresh water proportionally under a temperature condition of 20-30°C, stirring and dispersing the mixture to obtain a homogenous dispersion liquid;
(ii) adding modified graphite oxide nanoparticles proportionally to the dispersion liquid in step (i) under a temperature condition of 20-30 °C, and subsequently performing an ultrasonic dispersion to prepare a profile control system.

According to a preferred embodiment of the present disclosure, the dispersant in step (i) is used in a mass fraction of 0.5-2%, preferably 0.8-1.5%; and the stirring dispersion time is 10-20 minutes, preferably 15 minutes.

According to a preferred embodiment of the present disclosure, the modified graphite oxide nanoparticles in step (ii) is used in a mass fraction of 0.1-1%, preferably 0.2-0.8%; the ultrasonic power is within a range of 260-390W, preferably 325W; the ultrasonic dispersion time is within a range of 20-30 minutes, preferably 25 minutes; the standing time is 1-4 hours, preferably 2-3 hours.

In a fourth aspect, the present disclosure provides a method of using the ultra-deep reservoir salinity-induced self-coalescence modified graphite oxide nanoparticles profile control system including:
(a) pre-cleaning an ultra-deep reservoir stratum by using a slug of fresh water and/or low salinity water, and preferably an injection amount of the fresh water and/or the low salinity water is preferably 0.05-0.1 time of the stratum pore volume; the salinity can be reduced through the pre-cleaning process by using a slug of fresh water or low salinity water;
(b) injecting a dispersion liquid slug containing the salinity-induced self-coalescence profile control system according to the present disclosure into the ultra-deep reservoir stratum; preferably, the injection amount of aforementioned dispersion liquid is 0.05-0.3 time of the stratum pore volume;
(c) closing the borehole for 7-15 days under conditions of the ultra-deep reservoir; thereby inducing the modified graphite oxide nanoparticles in the salinity-induced self-coalescence profile control system to be shifted from the nanometer scale to micrometer scale;
(d) finishing the aforesaid steps, subsequently carrying out water flooding or gas flooding, and performing normal production. The ultra-deep reservoir salinity-induced self-coalescence modified graphite oxide nanoparticles profile control system constructed with the modified graphite oxide nanoparticles of the present disclosure have many advantages, such as wide raw material source, simple preparation process, high yield, stable product properties, facilitating industrial production of the product in the present disclosure, and the profile control system requires a simple on-site formulation and injection process, and has a flexible operation arrangement, and facilitates implementation of the oil fields.

In the present disclosure, the low salinity water refers to oil field reinjection water with a total salinity less than 10,000 mg/L.

The present disclosure will be described below in detail with reference to examples.

In the following examples, the graphite oxide nanoparticles, the monofunctional polyether amine (with a number average molecular weight of 600g/mol, 1,000g/mol, 2,000g/mol, 3,000g/mol), 1-ethyl- (3-dimethylaminopropyl) carbodiimide hydrochloride (EDC·HCl), the N-hydroxysuccinimide (NHS) and the dispersant sodium methylene bisnaphthalene sulfonate (NNO) are commercially available.

### Example 1

(1) 0.2g of graphite oxide nanoparticles having an average lamellar size of 129nm and an average lamellar thickness of 2.3nm was added into 100mL of deionized water under a temperature condition of 25°C, the mixture was subjected to ultrasonic dispersion for 25 minutes to obtain an uniformly dispersed graphite oxide nanoparticles dispersion liquid;
(2) Nitrogen gas was continuously fed into the graphite oxide nanoparticles dispersion liquid in step (1) under a temperature condition of 25 °C, 0.2g of l-ethyl-(3-dimethylaminopropyl) carbodiimide hydrochloride was added and stirred for 15 minutes, 0.2g of N-hydroxysuccinimide was further added and stirred for 15 minutes to obtain an active graphite oxide nanoparticles dispersion liquid;
(3) 0.6g of monofunctional polyether amine (with a molecular weight of 600g/mol) was added into the active graphite oxide nanoparticles dispersion liquid in step (2), the mixture was heated to 52°C, and subjected to a condensation reflux reaction in nitrogen gas for 30h to obtain a mixed reaction solution;
(4) The mixed reaction solution obtained in step (3) was filtered through a polytetrafluoroethylene membrane having a pore size of 0.22µm, the filtered reactant was washed with anhydrous methanol for 3 times, and subjected to freeze drying for 24h to obtain the modified graphite oxide nanoparticles.

The modified graphite oxide nanoparticles had an average lamellar size of 161nm and an average lamellar size of 3.8nm, and had a structure shown by Formula (II), wherein n=12 and R was methyl; the monofunctional polyether amine had a grafting ratio of 38wt%, based on a total weight of the modified graphite oxide nanoparticles.

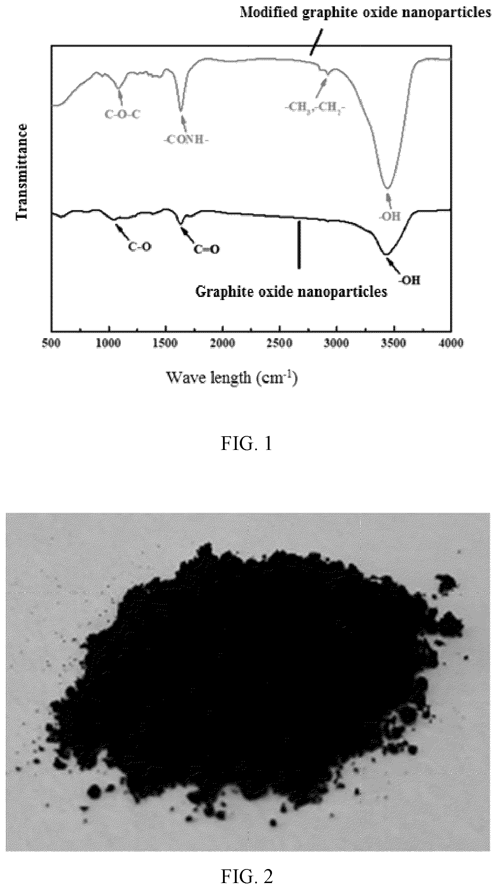

The infrared spectrum graph of the modified graphite oxide nanoparticles was illustrated in FIG. 1, which demonstrated that the monofunctional polyether amine was successfully grated on the graphite oxide nanoparticles.

The macro-scopic morphology of the modified graphite oxide nanoparticles was illustrated in FIG. 2, which showed a black powdery solid.

### Example 2

(1) 0.3g of graphite oxide nanoparticles having an average lamellar size of 183nm and an average lamellar thickness of 1.7nm was added into 100mL of deionized water under a temperature condition of 25°C, the mixture was subjected to ultrasonic dispersion for 25 minutes to obtain an uniformly dispersed graphite oxide nanoparticles dispersion liquid;
(2) Nitrogen gas was continuously fed into the graphite oxide nanoparticles dispersion liquid in step (1) under a temperature condition of 25°C, 0.3g of l-ethyl-(3-dimethylaminopropyl) carbodiimide hydrochloride was added and stirred for 15 minutes, 0.3g of N-hydroxysuccinimide was further added and stirred for 15 minutes to obtain an active graphite oxide nanoparticles dispersion liquid;
(3) 0.6g of monofunctional polyether amine (with a molecular weight of 1,000g/mol) was added into the active graphite oxide nanoparticles dispersion liquid in step (2), the mixture was heated to 55°C, and subjected to a condensation reflux reaction in nitrogen gas for 30h to obtain a mixed reaction solution;
(4) The mixed reaction solution obtained in step (3) was filtered through a polytetrafluoroethylene membrane having a pore size of 0.22µm, the filtered reactant was washed with anhydrous ethanol for 3 times, and subjected to freeze drying for 48h to obtain the modified graphite oxide nanoparticles.

The modified graphite oxide nanoparticles had an average lamellar size of 264nm and an average lamellar size of 3.6nm, and had a structure shown by Formula (II), wherein n=20 and R was H; the monofunctional polyether amine had a grafting ratio of 31wt%, based on a total weight of the modified graphite oxide nanoparticles.

### Example 3

(1) 0.5g of graphite oxide nanoparticles having an average lamellar size of 252nm and an average lamellar thickness of 1.1nm was added into 100mL of deionized water under a temperature condition of 25°C, the mixture was subjected to ultrasonic dispersion for 25 minutes to obtain an uniformly dispersed graphite oxide nanoparticles dispersion liquid;
(2) Nitrogen gas was continuously fed into the graphite oxide nanoparticles dispersion liquid in step (1) under a temperature condition of 25°C, 0.5g of l-ethyl-(3-dimethylaminopropyl) carbodiimide hydrochloride was added and stirred for 15 minutes, 0.5g of N-hydroxysuccinimide was further added and stirred for 15 minutes to obtain an active graphite oxide nanoparticles dispersion liquid;
(3) 1.0g of monofunctional polyether amine (with a molecular weight of 2,000g/mol) was added into the active graphite oxide nanoparticles dispersion liquid in step (2), the mixture was heated to 58°C, and subjected to a condensation reflux reaction in nitrogen gas for 36h to obtain a mixed reaction solution;
(4) The mixed reaction solution obtained in step (3) was filtered through a polytetrafluoroethylene membrane having a pore size of 0.22µm, the filtered reactant was washed with anhydrous ethanol for 3 times, and subjected to freeze drying for 60h to obtain the modified graphite oxide nanoparticles.

The modified graphite oxide nanoparticles had an average lamellar size of 362nm and an average lamellar size of 3.9nm, and had a structure shown by Formula (II), wherein n=41 and R was methyl; the monofunctional polyether amine had a grafting ratio of 33wt%, based on a total weight of the modified graphite oxide nanoparticles.

### Example 4

(1) 0.5g of graphite oxide nanoparticles having an average lamellar size of 302nm and an average lamellar thickness of 2.6nm was added into 100mL of deionized water under a temperature condition of 25°C, the mixture was subjected to ultrasonic dispersion for 25 minutes to obtain an uniformly dispersed graphite oxide nanoparticles dispersion liquid;
(2) Nitrogen gas was continuously fed into the graphite oxide nanoparticles dispersion liquid in step (1) under a temperature condition of 25°C, 0.5g of 1-ethyl-(3-dimethylaminopropyl) carbodiimide hydrochloride was added and stirred for 15 minutes, 0.5g of N-hydroxysuccinimide was further added and stirred for 15 minutes to obtain an active graphite oxide nanoparticles dispersion liquid;
(3) 1.5g of monofunctional polyether amine (with a molecular weight of 3,000g/mol) was added into the active graphite oxide nanoparticles dispersion liquid in step (2), the mixture was heated to 58°C, and subjected to a condensation reflux reaction in nitrogen gas for 42h to obtain a mixed reaction solution;
(4) The mixed reaction solution obtained in step (3) was filtered through a polytetrafluoroethylene membrane having a pore size of 0.22µm, the filtered reactant was washed with anhydrous ethanol for 4 times, and subjected to freeze drying for 72h to obtain the modified graphite oxide nanoparticles.

The modified graphite oxide nanoparticles had an average lamellar size of 417nm and an average lamellar size of 5.9nm, and had a structure shown by Formula (II), wherein n=60 and R was H; the monofunctional polyether amine had a grafting ratio of 29wt%, based on a total weight of the modified graphite oxide nanoparticles.

### Example 5

(i) 5.0g of the dispersant sodium methylene bisnaphthalene sulfonate (NNO) was added into 494.5mL of deionized water under a temperature condition of 25°C, and stirred for 15 minutes to obtain an uniform dispersion liquid;
(ii) 0.5g of the modified graphite oxide nanoparticles prepared in Example 2 was added into the dispersion liquid in step (i) under a temperature condition of 25°C, and subjected to an ultrasonic dispersion for 25 minutes, to obtain an ultra-deep reservoir salinity-induced self-coalescence modified graphite oxide nanoparticles profile control system.

The ultra-deep reservoir salinity-induced self-coalescence modified graphite oxide nanoparticles profile control system was added with salt (with the salinity shown in Table 1), and uniformly stirred, and sealed in an ampoule and subjected to continuous oscillation under a certain temperature, and particle size variation of the modified graphite oxide nanoparticles was shown in Table 1.

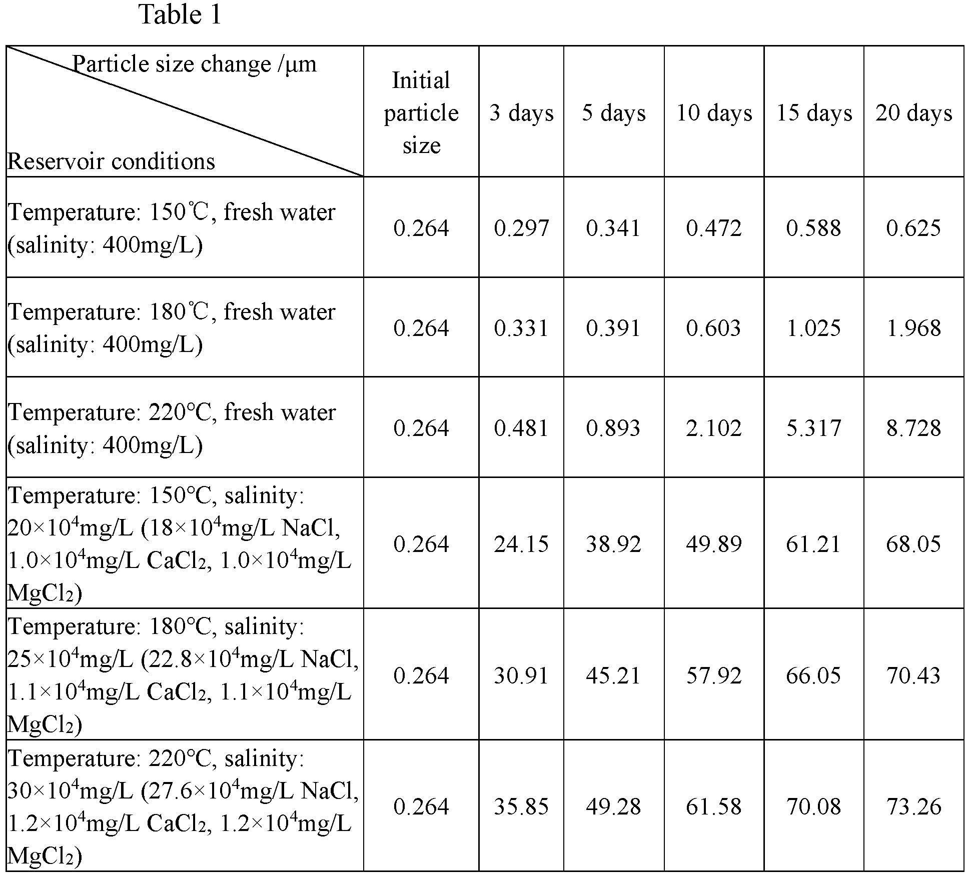

According to the results shown in Table 1, the profile control system of the present disclosure exhibited excellent stability under the conditions of high temperature and low salinity, thus the profile control system was able to migrate to deep parts of the stratum; the particle size of the modified graphite oxide nanoparticles was shifted from nanometer scale to the micrometer scale under an induction of the environment of high temperature and high salinity, and the modified graphite oxide nanoparticles profile control system had a salinity-induced self-coalescence effect. Therefore, the profile control system of the present disclosure was induced by the environment of high temperature and high salinity during the percolation process, and gradually implemented the self-coalescence phenomenon, such that the preferential percolation channels were effectively controlled.

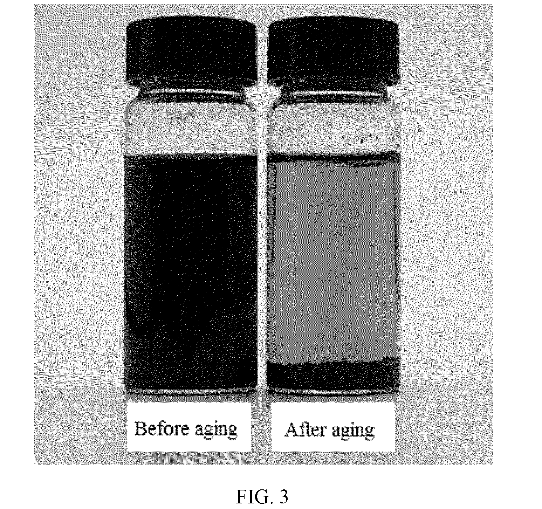

The macro-scopic morphology of the profile control system before and after aging process under the simulated reservoir conditions was shown in FIG. 3, which illustrated that the profile control system experienced an obvious salinity-induced self-coalescence phenomenon.

### Example 6

The modified graphite oxide nanoparticles were prepared according to the method of Example 5, except that the modified graphite oxide nanoparticles in use were the modified graphite oxide nanoparticles prepared in Example 3, the remaining conditions were identical with those of Example 5. The test conditions were same as those in Example 5, the test results were illustrated in Table 2.

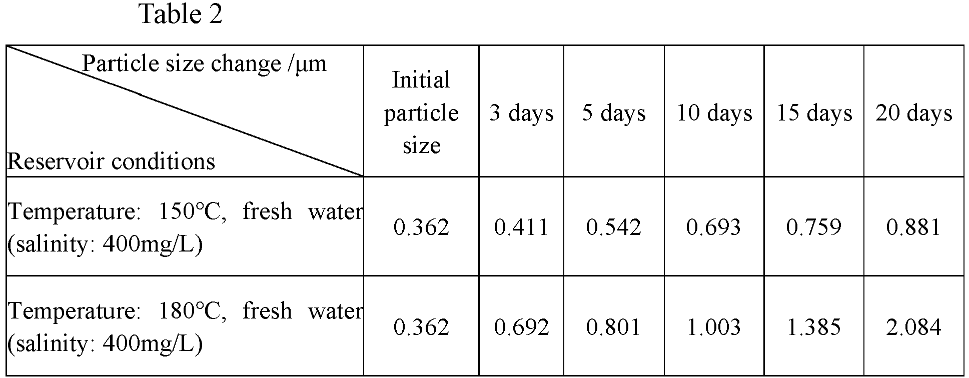

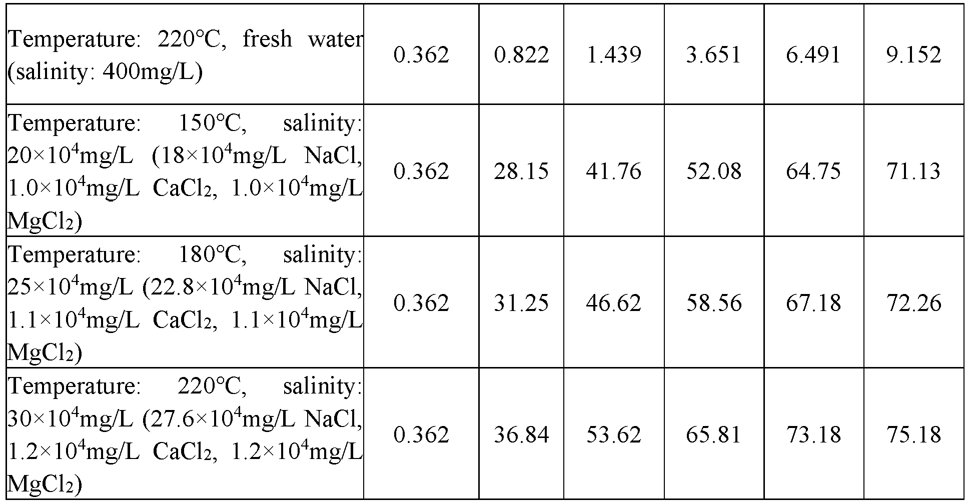

According to the results shown in Table 2, the profile control system of the present disclosure exhibited excellent stability under the conditions of high temperature and low salinity, thus the profile control system was able to migrate to deep parts of the stratum; the particle size of the modified graphite oxide nanoparticles was shifted from nanometer scale to the micrometer scale under an induction of the environment of high temperature and high salinity, and the modified graphite oxide nanoparticles profile control system had a salinity-induced self-coalescence effect. Therefore, the profile control system of the present disclosure was induced by the environment of high temperature and high salinity during the percolation process, and gradually implemented the self-coalescence phenomenon, such that the preferential percolation channels were effectively controlled.

### Example 7

The modified graphite oxide nanoparticles were prepared according to the method of Example 5, except that the modified graphite oxide nanoparticles in use were the modified graphite oxide nanoparticles prepared in Example 4, the remaining conditions were identical with those of Example 5. The test conditions were same as those in Example 5, the test results were illustrated in Table 3.

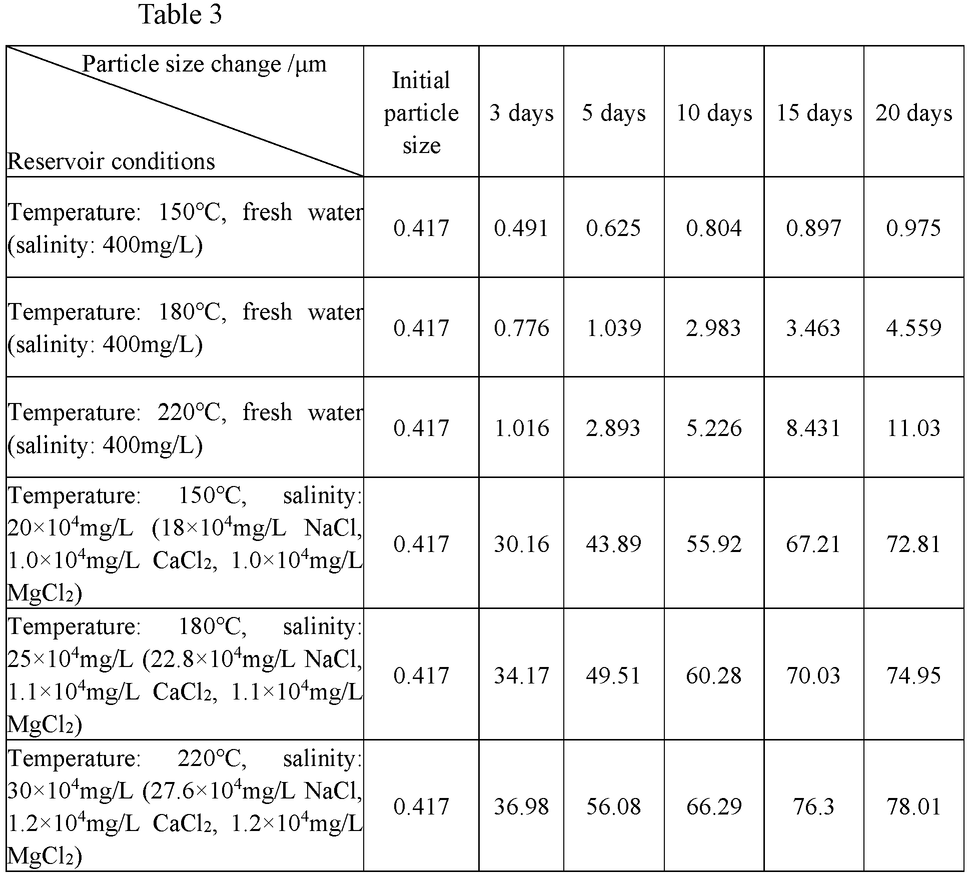

According to the results shown in Table 3, the profile control system of the present disclosure exhibited excellent stability under the conditions of high temperature and low salinity, thus the profile control system was able to migrate to deep parts of the stratum; the particle size of the modified graphite oxide nanoparticles was shifted from nanometer scale to micrometer scale under an induction of the environment of high temperature and high salinity, and the modified graphite oxide nanoparticles profile control system had a salinity-induced self-coalescence effect. Therefore, the profile control system of the present disclosure was induced by the environment of high temperature and high salinity during the percolation process, and gradually implemented the self-coalescence phenomenon, such that the preferential percolation channels were effectively controlled.

### Example 8

The modified graphite oxide nanoparticles were prepared according to the method of Example 6, except that the dispersant was 5.0g of sodium dodecylbenzene sulfonate, the remaining conditions were identical with those of Example 6. The test results were illustrated in Table 4.

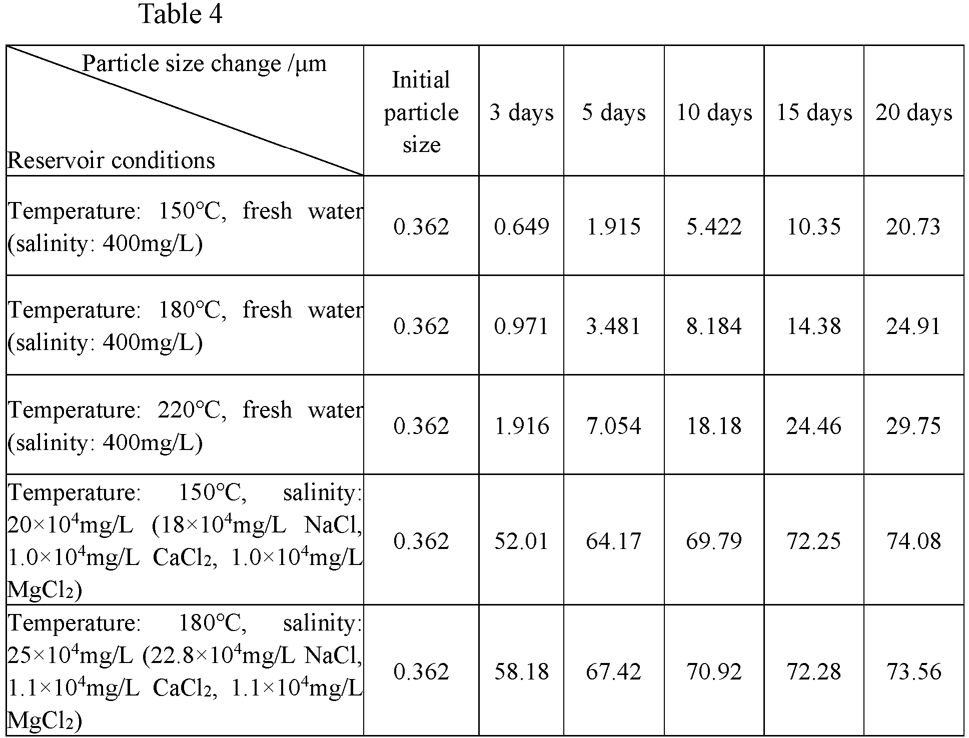

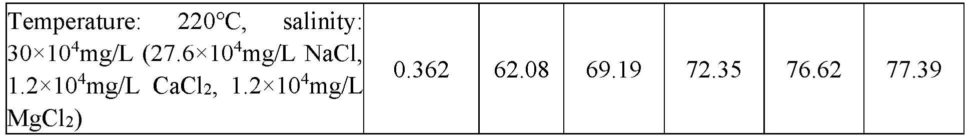

According to the results shown in Table 4, as compared with Example 6, when the dispersant of the profile control system of the present disclosure was replaced with sodium dodecylbenzene sulfonate, the particle size of the modified graphite oxide nanoparticles remained relatively stable under the conditions of high temperature and low salinity, and the phenomenon of increased particle size was not significant; however, under the induction of high temperature and high salinity environment, the speed of shifting the particle size of the modified graphite oxide nanoparticles from the nanometer scale to the micrometer scale was faster, which was not beneficial to the migration of the profile control system to the deeper part of the stratum.

### Example 9

The application method of the profile control system was described by taking the dimensions of rock core as an example and the plugging ratio as an evaluation index. It was common practice in the field to inject a profile control system by using a rock core having a relatively high permeability; when the plugging ratio was higher than 80%, it was deemed that the rock core realized an effective control, such that the permeability of aforementioned rock core was reduced, the reservoir stratum tended to be homogenized; the higher was the plugging ratio, the better was the homogenization effect of the reservoir stratum.

The specification of a rock core was as follows: the length was 10cm, the diameter was 2.5cm, the pore volume was 9.6mL, and the permeability was 20mD; the temperature was 140 °C, the salinity of simulated water was 20×10⁴mg/L, the salinity ingredients were composed of NaCl in an amount of 18×10⁴mg/L, CaCl₂ in an amount of 1.0×10⁴mg/L and MgCl₂ in an amount of 1.0×10⁴mg/L, and the specific steps were as follows:
(a) pre-cleaning slug: 0.96mL (0.1 time of the pore volume) of fresh water slug was injected into the rock core;
(b) main slug: the salinity-induced self-coalescence profile control system prepared in Example 5 was injected, the injection amount was 0.3 times of the stratum pore volume;
(c) induced coalescence stage: closing the borehole for 7 days;
(d) production stage: after the aforementioned three steps were accomplished, the water flooding was performed again to carry out the normal production.

After the four steps were finished, the water flooding was performed until the pressure was stable, the pressure change of each stage was recorded, the calculated plugging ratio was 82.39%. It demonstrated that the ultra-deep reservoir salinity-induced self-coalescence modified graphite oxide nanoparticles profile control system of the Example can effectively control the preferential percolation channels.

### Example 10

The specification of a rock core was as follows: the length was 10cm, the diameter was 2.5cm, the pore volume was 9.6mL, and the permeability was 20mD; the temperature was 180°C, the salinity of simulated water was 25×10⁴mg/L, the salinity ingredients were composed of NaCl in an amount of 23.8×10⁴mg/L, CaCl₂ in an amount of 1.1×10⁴mg/L and MgCl₂ in an amount of 1.1×10⁴mg/L, and the specific steps were as follows:
(a) pre-cleaning slug: 0.96mL (0.1 time of the pore volume) of fresh water slug was injected into the rock core;
(b) main slug: the salinity-induced self-coalescence profile control system prepared in Example 6 was injected, the injection amount was 0.2 times of the stratum pore volume;
(c) induced coalescence stage: closing the borehole for 7 days;
(d) production stage: after the aforementioned three steps were accomplished, the water flooding was performed again to carry out the normal production.

After the four steps were finished, the water flooding was performed until the pressure was stable, the pressure change of each stage was recorded, the calculated plugging ratio was 87.15%. It demonstrated that the salinity-induced self-coalescence modified graphite oxide nanoparticles profile control system of the Example can effectively control the preferential percolation channels.

### Example 11

The specification of a rock core was as follows: the length was 10cm, the diameter was 2.5cm, the pore volume was 9.6mL, and the permeability was 20mD; the temperature was 220 °C, the salinity of simulated water was 30×10⁴mg/L, the salinity ingredients were composed of NaCl in an amount of 27.6×10⁴mg/L, CaCl₂ in an amount of 1.2×10⁴mg/L and MgCl₂ in an amount of 1.2×10⁴mg/L, and the specific steps were as follows:
(a) pre-cleaning a slug: 0.96mL (0.1 time of the pore volume) of fresh water slug was injected into the rock core;
(b) main slug: the salinity-induced self-coalescence profile control system prepared in Example 7 was injected, the injection amount was 0.2 times of the stratum pore volume;
(c) induced coalescence stage: closing the borehole for 7 days;
(d) production stage: after the aforementioned three steps were accomplished, the water flooding was performed again to carry out the normal production.

After the four steps were finished, the water flooding was performed until the pressure was stable, the pressure change of each stage was recorded, the calculated plugging ratio was 93.07%. It demonstrated that the salinity-induced self-coalescence modified graphite oxide nanoparticles profile control system of the Example can effectively regulate and control the preferential percolation channels.

### Example 12

The application method of a profile control system was performed according to the method in Example 10, except that the profile control system prepared in Example 8 was injected in the step (b), the remaining conditions were identical with those of Example 10. After the four steps were finished, the water flooding was performed until the pressure was stable, the pressure change of each stage was recorded, the calculated plugging ratio was 80.6%. It demonstrated that the ultra-deep reservoir salinity-induced self-coalescence modified graphite oxide nanoparticles profile control system of the Example can effectively control the preferential percolation channels.

### Comparative Example 1

The application method of a profile control system was performed according to the method in Example 5, except that in step (ii), 0.5g of the modified graphite oxide nanoparticles (having an average particle diameter of 183nm and a thickness of 1.7 nm) was added into the dispersion liquid in step (i) under a temperature condition of 25°C, and subjected to an ultrasonic dispersion for 25 minutes to obtain the graphite oxide nanoparticles profile control system. The test conditions were the same as in those in Example 5, and the test results were shown in Table 5.

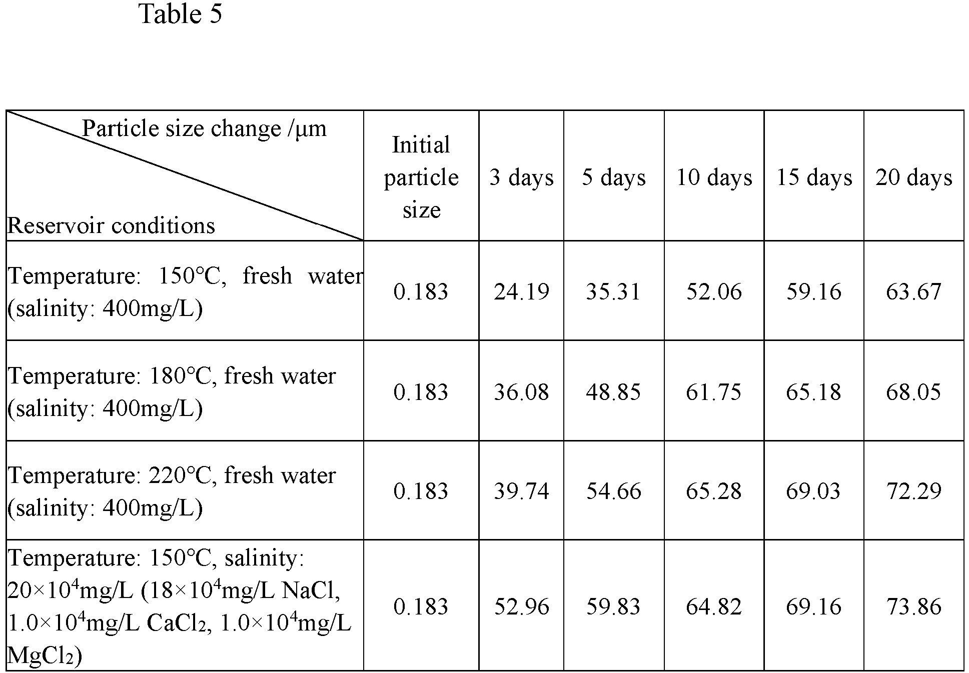

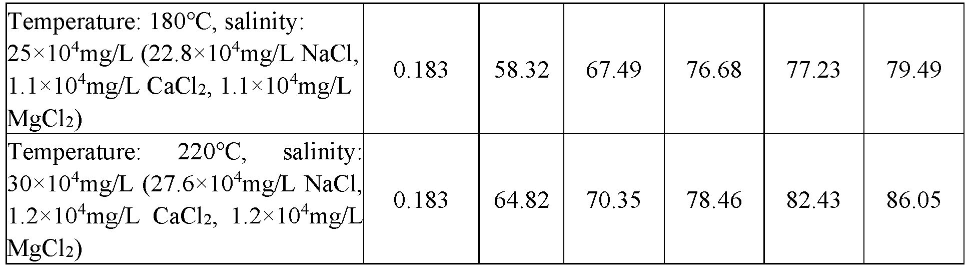

According to the results shown in Table 5, the profile control system prepared from graphite oxide nanoparticles in use may perform self-coalescence under the conditions of high temperature and low salinity, and cannot migrate to the deep part of the stratum, and the effects of "high temperature resistance, high salinity resistance, injectability, long distance migration and profile controllability" cannot be achieved.

### Comparative Example 2

The application method of a profile control system was performed according to the method in Example 8, except that in step (b) main slug: the salinity-induced self-coalescence profile control system prepared in Comparative Example 1 was injected, the injection amount was 0.3 times of the stratum pore volume;
After the four steps were finished, the water flooding was performed until the pressure was stable, the pressure change of each stage was recorded, the calculated plugging ratio was 61.27%.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A salinity-induced self-coalescence modified graphite oxide nanoparticles particles for ultra-deep reservoir comprising a graphite oxide nanoparticles and a monofunctional polyether amine covalently grafted to the surface of the graphite oxide nanoparticles through amide bonds, the monofunctional polyether amine has a structural formula shown by Formula (I); 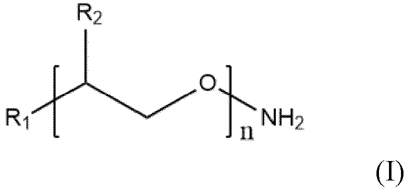
wherein R₁ is one selected from C₁-C₅ alkyl; R₂ is H or one of the C₁-C₅ alkyl;
n is an integer from 10 to 60;
wherein the monofunctional polyether amine has a grafting ratio of 15-40wt%, based on a total weight of the modified graphite oxide nanoparticles;
wherein the modified graphite oxide nanoparticles have an average lamellar size of 150-600 nm;
the modified graphite oxide nanoparticles have an average lamellar thickness of 1-100 nm.

2. The modified graphite oxide nanoparticles according to claim 1, wherein
R₁ is CH₃;
R₂ is H and/or CH₃;
n is 12, 20, 40 or 60.

3. The modified graphite oxide nanoparticles according to claim 1, wherein the modified graphite oxide nanoparticles have an average lamellar size of 200-500 nm;
the modified graphite oxide nanoparticles have an average lamellar thickness of 1-20 nm.

4. The modified graphite oxide nanoparticles according to any one of claims 1-3, wherein the modified graphite oxide nanoparticles have at least one structure shown in Formulae (II), (III), (IV) and (V); 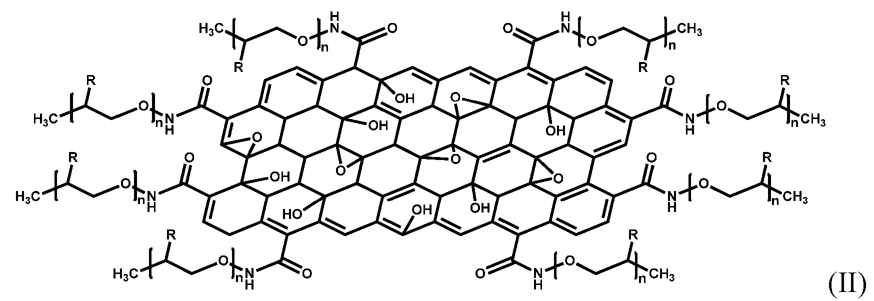 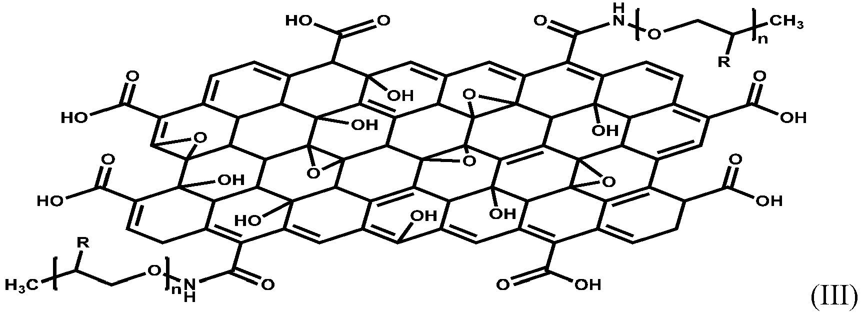 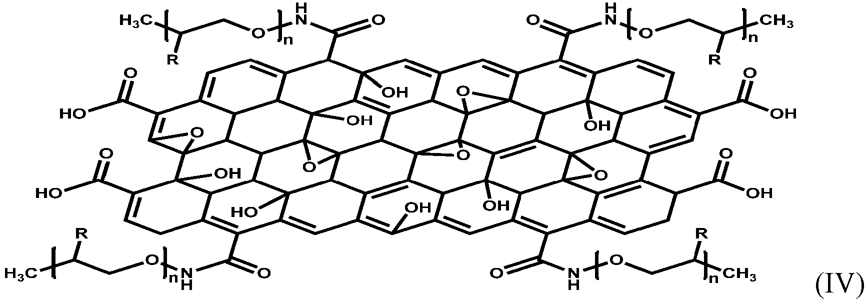 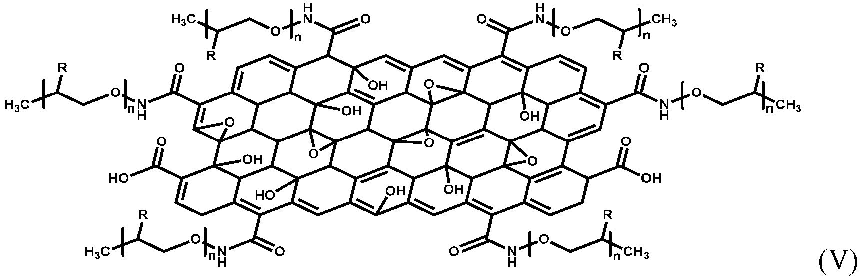 preferably in Formulae (II), (III), (IV) and (V), R is each independently H and/or CH₃; n is each independently 12, 20, 40 or 60.

5. A method of preparing the modified graphite oxide nanoparticles according to any one of claims 1-4 comprising:
(1) dispersing a graphite oxide nanoparticles in a solvent to obtain a graphite oxide nanoparticles dispersion liquid;
(2) mixing the graphite oxide nanoparticles dispersion liquid with a material I, a material II and monofunctional polyether amine under an inert gas atmosphere, and carrying out a reaction to obtain a mixed reaction liquid;
(3) filtering, washing and drying the mixed reaction liquid to prepare the modified graphite oxide nanoparticles;
wherein the material I in step (2) is selected from 1-ethyl-(3-dimethylaminopropyl) carbodiimide hydrochloride and/or dicyclohexylcarbodiimide;
the material II is selected from 1-hydroxybenzotriazole and/or N-hydroxysuccinimide.

6. The method according to claim 5, wherein the method of preparing the modified graphite oxide nanoparticles including:
(1) dispersing graphite oxide nanoparticles in a solvent under a temperature condition of 20-30 °C to obtain a graphite oxide nanoparticles dispersion liquid;
(2) adding a material I and a material II into the graphite oxide nanoparticles dispersion liquid in step (1) at the temperature of 20-30°C under an inert gas atmosphere condition to obtain an active graphite oxide nanoparticles dispersion liquid;
(3) adding monofunctional polyether amine into the active graphite oxide nanoparticles dispersion liquid in step (2) under the inert gas atmosphere condition to carry out a reaction to obtain a mixed reaction liquid;
(4) filtering, washing and drying the mixed reaction liquid to prepare the modified graphite oxide nanoparticles.

7. The method according to any one of claims 5-6, wherein
the graphite oxide nanoparticles has an average lamellar size of 50-500 nm; preferably 100-300 nm;
the graphite oxide nanoparticles have an average lamellar thickness of 1-100 nm, preferably 1-20 nm;
the monofunctional polyether amine has a number average molecular weight of 600-3,000 g/mol;
the solvent is at least one of water, methanol and ethanol.

8. An ultra-deep reservoir salinity-induced self-coalescence modified graphite oxide nanoparticles profile control system comprising 0.1-1.0wt% of graphite oxide nanoparticles; the graphite oxide nanoparticles comprising the modified graphite oxide nanoparticles according to any one of claims 1-4, wherein the profile control system further comprises a dispersant and water; preferably, the dispersant is contained in an amount of 0.5-2wt%, and water is contained in an amount of 97-99.4wt%.

9. The profile control system according to claim 8, wherein the dispersant is at least one selected from the group consisting of sodium dodecylbenzene sulphonate, sodium lauryl sulphate and a substance having the structure shown by Formula (VI), preferably the substance having the structure shown by Formula (VI): 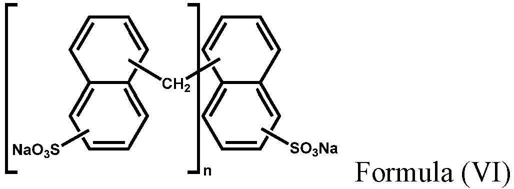 wherein n is an integer from 1 to 4.

10. A method of using the salinity-induced self-coalescence modified graphite oxide nanoparticles for ultra-deep reservoir profile control system into ultra-deep reservoir stratum including:
(a) pre-cleaning an ultra-deep reservoir stratum by using a slug of fresh water and/or low salinity water, wherein an injection amount of the fresh water and/or the low salinity water is preferably 0.05-0.1 time of the stratum pore volume;
(b) injecting a dispersion liquid slug containing the salinity-induced self-coalescence profile control system according to any one of claims 8-9 into the ultra-deep reservoir stratum; preferably, the injection amount of the dispersion liquid is 0.05-0.3 time of the stratum pore volume;
(c) closing the borehole for 7-15 days under conditions of the ultra-deep reservoir;
(d) finishing the aforesaid steps, subsequently carrying out water flooding or gas flooding, and performing normal production.

## Patentansprüche

1. Salinitäts-induzierte selbstkoaleszierende modifizierte Graphitoxid-Nanopartikel für ultra-tiefe Reservoirs, aufweisend Graphitoxid-Nanopartikel und ein monofunktionelles Polyetheramin, das über Amidbindungen kovalent an die Oberfläche der Graphitoxid-Nanopartikel gepfropft ist, wobei das monofunktionelle Polyetheramin eine Strukturformel aufweist, die durch Formel (I) dargestellt ist 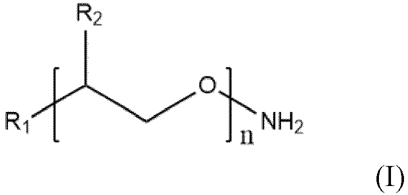
in welcher R₁ aus C₁-C₅-Alkyl ausgewählt ist; R₂ H oder eines der C₁-C₅-Alkyl ist;
n eine ganze Zahl von 10 bis 60 ist;
wobei das monofunktionelle Polyetheramin ein Pfropfverhältnis von 15-40 Gew.-%, bezogen auf das Gesamtgewicht der modifizierten Graphitoxid-Nanopartikel, aufweist; wobei die modifizierten Graphitoxid-Nanopartikel eine durchschnittliche lamellare Größe von 150 bis 600 nm aufweisen;
die modifizierten Graphitoxid-Nanopartikel eine durchschnittliche lamellare Dicke von 1 bis 100 nm aufweisen.

2. Modifizierte Graphitoxid-Nanopartikel nach Anspruch 1, wobei
R₁ CH₃ ist;
R₂ H und/oder CH₃ ist;
n 12, 20, 40 oder 60 ist.

3. Modifizierte Graphitoxid-Nanopartikel nach Anspruch 1, wobei die modifizierten Graphitoxid-Nanopartikel eine durchschnittliche lamellare Größe von 200 bis 500 nm aufweisen;
die modifizierten Graphitoxid-Nanopartikel eine durchschnittliche lamellare Dicke von 1 bis 20 nm aufweisen.

4. Modifizierte Graphitoxid-Nanopartikel nach einem der Ansprüche 1 bis 3, wobei die modifizierten Graphitoxid-Nanopartikel mindestens eine Struktur aufweisen, die in den Formeln (II), (III), (IV) und (V) gezeigt ist; 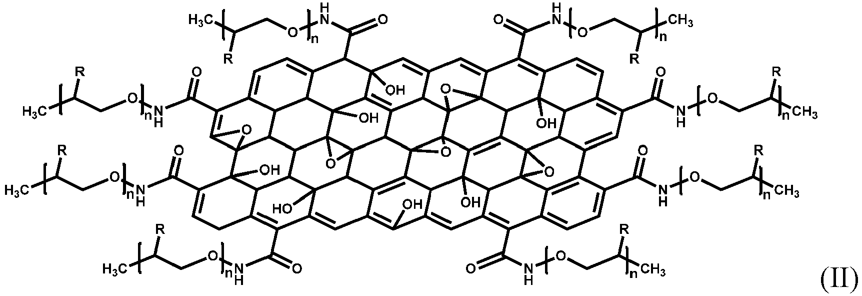 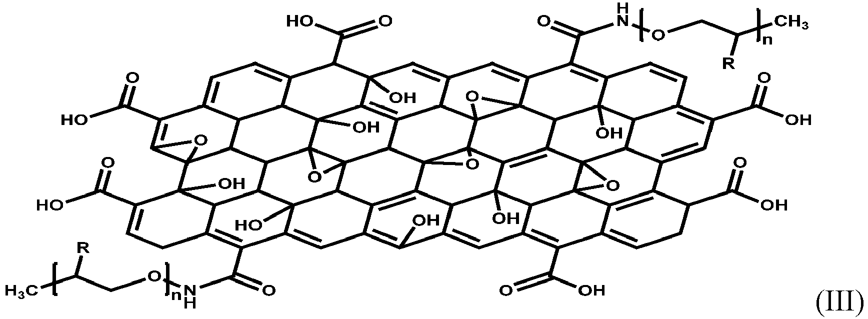 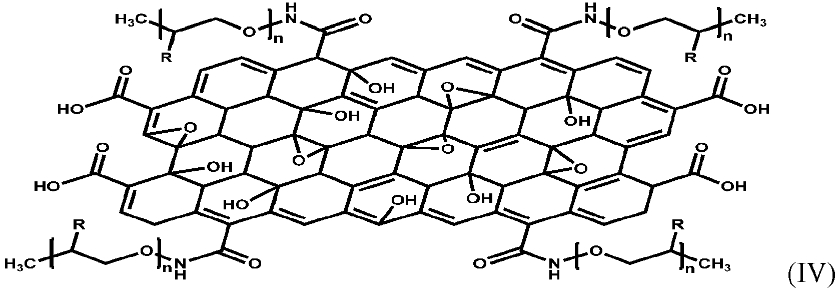 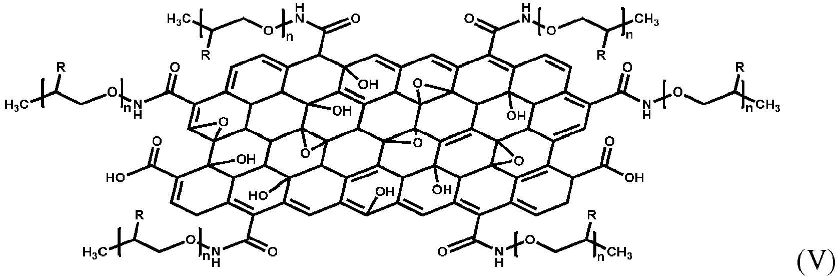 wobei vorzugsweise in den Formeln (II), (III), (IV) und (V) R jeweils unabhängig voneinander H und/oder CH₃ ist; n jeweils unabhängig voneinander 12, 20, 40 oder 60 ist.

5. Verfahren zur Herstellung der modifizierten Graphitoxid-Nanopartikel nach einem der Ansprüche 1 bis 4, aufweisend:
(1) Dispergieren von Graphitoxid-Nanopartikeln in einem Lösungsmittel, um eine Graphitoxid-Nanopartikel-Dispersionsflüssigkeit zu erhalten;
(2) Mischen der Graphitoxid-Nanopartikel-Dispersionsflüssigkeit mit einem Material I, einem Material II und einem monofunktionellen Polyetheramin unter einer Inertgas-Atmosphäre und Durchführen einer Reaktion, um eine gemischte Reaktionsflüssigkeit zu erhalten;
(3) Filtern, Waschen und Trocknen der gemischten Reaktionsflüssigkeit, um die modifizierten Graphitoxid-Nanopartikel herzustellen;
wobei das Material I in Schritt (2) ausgewählt ist aus 1-Ethyl-(3-dimethylaminopropyl)carbodiimidhydrochlorid und/oder Dicyclohexylcarbodiimid;
das Material II ausgewählt ist aus 1-Hydroxybenzotriazol und/oder N-Hydroxysuccinimid.

6. Verfahren nach Anspruch 5, wobei das Verfahren zur Herstellung der modifizierten Graphitoxid-Nanopartikel aufweist:
(1) Dispergieren von Graphitoxid-Nanopartikeln in einem Lösungsmittel unter einer Temperaturbedingung von 20-30°C, um eine Graphitoxid-Nanopartikel-Dispersionsflüssigkeit zu erhalten;
(2) Hinzufügen eines Materials I und eines Materials II zu der Graphitoxid-Nanopartikel-Dispersionsflüssigkeit in Schritt (1) bei einer Temperatur von 20-30°C unter einer Inertgas-Atmosphäre, um eine aktive Graphitoxid-Nanopartikel-Dispersionsflüssigkeit zu erhalten;
(3) Hinzufügen von monofunktionellem Polyetheramid zu der aktiven Graphitoxid-Nanopartikel-Dispersionsflüssigkeit in Schritt (2) unter der Inertgas-Atmosphäre, um eine Reaktion durchzuführen, um eine gemischte Reaktionsflüssigkeit zu erhalten;
(4) Filtern, Waschen und Trocknen der gemischten Reaktionsflüssigkeit, um die modifizierten Graphitoxid-Nanopartikel herzustellen.

7. Verfahren nach einem der Ansprüche 5 bis 6, wobei
die Graphitoxid-Nanopartikel eine durchschnittliche lamellare Größe von 50 bis 500 nm, vorzugsweise 100 bis 300 nm, aufweisen;
die Graphitoxid-Nanopartikel eine durchschnittliche lamellare Dicke von 1 bis 100 nm, vorzugsweise 1 bis 20 nm aufweisen;
das monofunktionelle Polyetheramin ein zahlenmittleres Molekulargewicht von 600 bis 3000 g/mol aufweist;
das Lösungsmittel mindestens eines von Wasser, Methanol und Ethanol ist.

8. Profilsteuerungssystem für Salinitäts-induzierte selbstkoaleszierende modifizierte Graphitoxid-Nanopartikel für ultra-tiefe Reservoirs, aufweisend 0,1-1, 0 Gew.-% Graphitoxid-Nanopartikel; wobei die Graphitoxid-Nanopartikel die modifizierten Graphitoxid-Nanopartikel nach einem der Ansprüche 1-4 aufweisen, wobei das Profilsteuerungssystem ferner ein Dispergiermittel und Wasser aufweist; wobei vorzugsweise das Dispergiermittel in einer Menge von 0,5-2 Gew.-% und Wasser in einer Menge von 97-99,4 Gew.-% enthalten ist.

9. Profilsteuerungssystem nach Anspruch 8, wobei das Dispergiermittel mindestens eines ist, das ausgewählt ist aus der Gruppe bestehend aus Natriumdodecylbenzolsulfonat, Natriumlaurylsulfat und einer Substanz mit der durch Formel (VI) gezeigten Struktur, vorzugsweise die Substanz mit der durch Formel (VI) gezeigten Struktur: 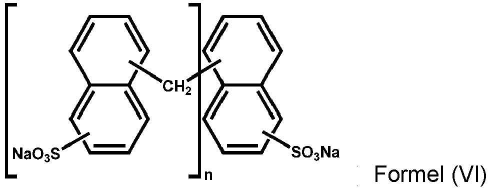 wobei n eine ganze Zahl von 1 bis 4 ist.

10. Verfahren zur Verwendung des Profilsteuerungssystems für Salinitäts-induzierte selbstkoaleszierende modifizierte Graphitoxid-Nanopartikel für ultra-tiefe Reservoirs in einer ultra-tiefen Reservoirschicht, aufweisend:
(a) Vorreinigen einer ultra-tiefen Reservoirschicht unter Verwendung einer Frischwasser- und/oder Niedrigsalinitätwasser-Spritze, wobei die Injektionsmenge des Frischwassers und/oder des Niedrigsalinitätwassers vorzugsweise 0,05-0,1-mal das Porenvolumen der Schicht beträgt;
(b) Injizieren einer Dispersionsflüssigkeitsmenge, die das Salinitäts-induzierte selbstkoaleszierende-Profilsteuerungssystem nach einem der Ansprüche 8 bis 9 aufweist, in die ultra-tiefe Reservoirschicht; wobei vorzugsweise die Injektionsmenge der Dispersionsflüssigkeit das 0,05- bis 0,3-fache des Porenvolumens der Schicht beträgt;
(c) Schließen des Bohrlochs für 7 bis 15 Tage unter den Bedingungen des ultra-tiefen Reservoirs;
(d) Beenden der vorgenannten Schritte, anschließendes Durchführen einer Wasserflutung oder Gasflutung und Durchführen einer normalen Förderung.

## Revendications

1. Particules de nanoparticules d'oxyde de graphite modifiées par auto-coalescence induite par la salinité pour les réservoirs ultra-profonds, comprenant des nanoparticules d'oxyde de graphite et une polyétheramine monofonctionnelle greffée de manière covalente à la surface des nanoparticules d'oxyde de graphite par des liaisons amide, la polyétheramine monofonctionnelle ayant une formule structurelle représentée par la formule (I) ; 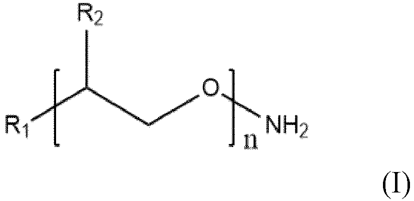
dans laquelle R₁ est choisi parmi les alkyles en C₁ à C₅ ; R₂ est H ou l'un des alkyles en C₁ à C₅ ;
n est un nombre entier de 10 à 60 ;
la polyétheramine monofonctionnelle a un taux de greffage de 15 à 40 % en poids, sur la base du poids total des nanoparticules d'oxyde de graphite modifiées ;
les nanoparticules d'oxyde de graphite modifiées ont une taille lamellaire moyenne de 150 à 600 nm ;
les nanoparticules d'oxyde de graphite modifiées ont une épaisseur lamellaire moyenne de 1 à 100 nm.

2. Nanoparticules d'oxyde de graphite modifiées selon la revendication 1, dans lesquelles
R₁ est CH₃ ;
R₂ est H et/ou CH₃ ;
n est 12, 20, 40 ou 60.

3. Nanoparticules d'oxyde de graphite modifiées selon la revendication 1,
dans lesquelles les nanoparticules d'oxyde de graphite modifiées ont une taille lamellaire moyenne de 200 à 500 nm ;
les nanoparticules d'oxyde de graphite modifiées ont une épaisseur lamellaire moyenne de 1 à 20 nm.

4. Nanoparticules d'oxyde de graphite modifiées selon l'une des revendications 1 à 3,
dans lesquelles les nanoparticules d'oxyde de graphite modifiées ont au moins une structure représentée dans les formules (II), (III), (IV) et (V) ; 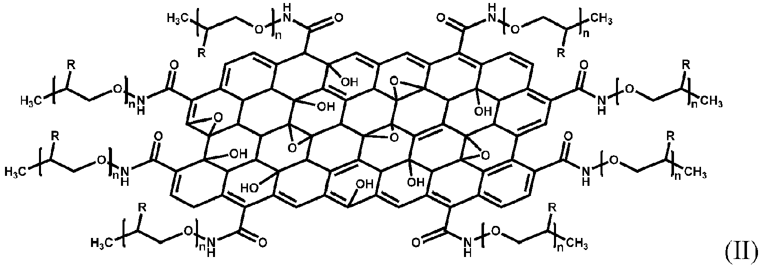 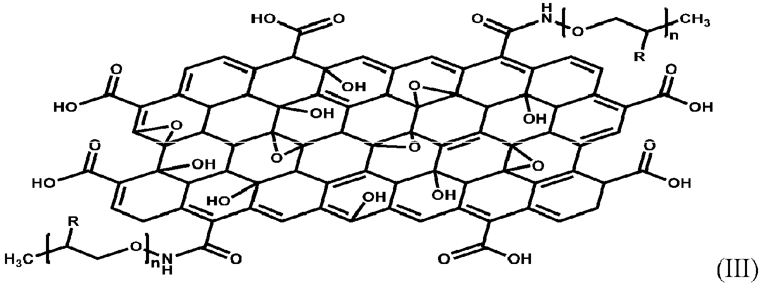 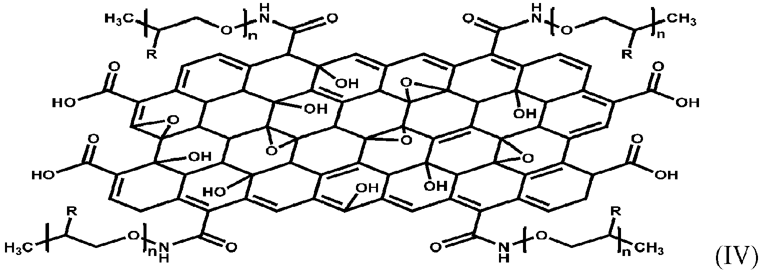 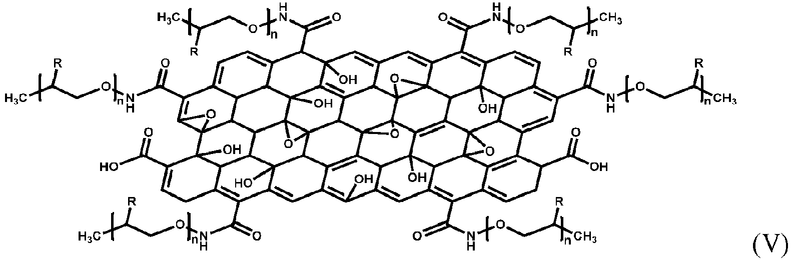 de préférence, dans les formules (II), (III), (IV) et (V), R est indépendamment H et/ou CH₃ ; n est indépendamment 12, 20, 40 ou 60.

5. Procédé de préparation des nanoparticules d'oxyde de graphite modifiées selon l'une des revendications 1 à 4, consistant à :
(1) disperser les nanoparticules d'oxyde de graphite dans un solvant pour obtenir un liquide dispersion des nanoparticules d'oxyde de graphite ;
(2) mélanger le liquide de dispersion des nanoparticules d'oxyde de graphite avec un matériau I, un matériau Il et une polyétheramine monofonctionnelle sous une atmosphère de gaz inerte, et réaliser une réaction pour obtenir un liquide de réaction mélangé ;
(3) filtrer, laver et sécher le liquide de réaction mélangé pour préparer les nanoparticules d'oxyde de graphite modifiées ;
dans lequel le matériau I de l'étape (2) est choisi parmi le chlorhydrate de 1-éthyl-(3-diméthylaminopropyl) carbodiimide et/ou le dicyclohexylcarbodiimide ;
le matériau Il est choisi parmi le 1-hydroxybenzotriazole et/ou le N-hydroxysuccinimide.

6. Procédé selon la revendication 5,
dans lequel le procédé de préparation des nanoparticules d'oxyde de graphite modifiées consiste à :
(1) disperser les nanoparticules d'oxyde de graphite dans un solvant à une température de 20 à 30 °C pour obtenir un liquide de dispersion des nanoparticules d'oxyde de graphite ;
(2) ajouter un matériau I et un matériau II au liquide de dispersion des nanoparticules d'oxyde de graphite de l'étape (1) à une température de 20 à 30 °C sous une atmosphère de gaz inerte pour obtenir un liquide de dispersion actif des nanoparticules d'oxyde de graphite ;
(3) ajouter une polyétheramine monofonctionnelle au liquide de dispersion actif des nanoparticules d'oxyde de graphite de l'étape (2) sous une atmosphère de gaz inerte pour réaliser une réaction afin d'obtenir un liquide de réaction mélangé ;
(4) filtrer, laver et sécher le liquide de réaction mélangé pour préparer les nanoparticules d'oxyde de graphite modifiées.

7. Procédé selon l'une des revendications 5 à 6, dans lequel
les nanoparticules d'oxyde de graphite ont une taille lamellaire moyenne de 50 à 500 nm ; de préférence de 100 à 300 nm ;
les nanoparticules d'oxyde de graphite ont une épaisseur lamellaire moyenne de 1 à 100 nm, de préférence de 1 à 20 nm ;
la polyétheramine monofonctionnelle a un poids moléculaire moyen en nombre de 600 à 3 000 g/mol ;
le solvant est au moins l'un des suivants : eau, méthanol et éthanol.

8. Système de contrôle du profil des nanoparticules d'oxyde de graphite modifiées par auto-coalescence induite par la salinité dans un réservoir ultra-profond, comprenant 0,1 à 1,0 % en poids de nanoparticules d'oxyde de graphite ; les nanoparticules d'oxyde de graphite comprenant les nanoparticules d'oxyde de graphite modifiées selon l'une des revendications 1 à 4, dans lequel le système de contrôle du profil comprend en outre un dispersant et de l'eau ; de préférence, le dispersant est contenu dans une proportion de 0,5 à 2 % en poids, et l'eau est contenue dans une proportion de 97 à 99,4 % en poids.

9. Système de contrôle de profil selon la revendication 8,
dans lequel le dispersant est au moins un produit choisi dans le groupe constitué du dodécylbenzène sulfonate de sodium, du lauryl sulfate de sodium et d'une substance ayant la structure représentée par la formule (VI), de préférence la substance ayant la structure représentée par la formule (VI) : 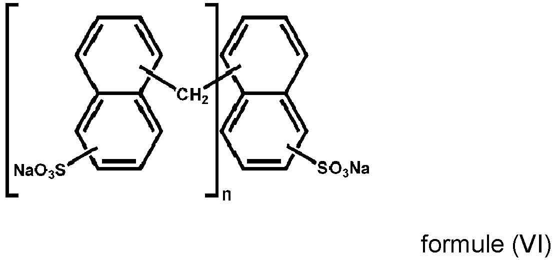 dans laquelle n est un nombre entier de 1 à 4.

10. Procédé d'utilisation des nanoparticules d'oxyde de graphite modifiées par auto-coalescence induite par la salinité pour le système de contrôle du profil des réservoirs ultra-profonds dans la strate des réservoirs ultra-profonds, consistant à :
(a) pré-nettoyer une strate de réservoir ultra-profond à l'aide d'un flot d'eau douce et/ou d'eau à faible salinité, la quantité injectée d'eau douce et/ou d'eau à faible salinité étant de préférence de 0,05 à 0,1 fois le volume des pores de la strate ;
(b) injecter un liquide de dispersion contenant le système de contrôle du profil d'auto-coalescence induite par la salinité selon l'une des revendications 8 à 9 dans la strate du réservoir ultra-profond ; de préférence, la quantité d'injection du liquide de dispersion est de 0,05 à 0,3 fois le volume des pores de la strate ;
(c) fermer le trou de forage pendant 7 à 15 jours dans les conditions du réservoir ultra-profond ;
(d) terminer les étapes susmentionnées, procéder ensuite à l'injection d'eau ou de gaz et assurer une production normale.
